# FASCICULE DE BREVET EUROPEEN

(11) **EP 2 236 439 B1**
(45) Date de publication et mention de la délivrance du brevet: **16.05.2012**
(21) Numéro de dépôt: 10159059.4
(22) Date de dépôt: 02.04.2010
(51) Int. Cl.: B65D 90/02, B65D 88/06, B60P 3/22

(54) **Tronçon en matériau composite pour véhicule citerne**
Abschnitt aus Verbundmaterial für ein Fahrzeug
Section made of composite material for a tank truck

(30) Priorité: 03.04.2009 FR 0901648
(43) Date de publication de la demande: 06.10.2010
(73) Titulaire: Etablissements MAGYAR, 21000 Dijon (FR)
(72) Inventeur: Magyar, Daniel, 75012 Paris (FR); Magyar, Laurent, 75001 Paris (FR)
(74) Mandataire: Novagraaf Technologies

(56) Documents cités:
- FR-A- 2 797 236
- US-A- 2 097 113
- US-A- 5 918 759

## Description

### DOMAINE TECHNIQUE DE L'INVENTION

L'invention se rapporte au domaine des véhicules citernes autoportés. Par « véhicule citerne autoportée », on entend un véhicule citerne tracté comportant un corps de citerne pourvu d'une attache de traction et supporté par au moins un train de roue. Un tel véhicule citerne ne comporte pas de châssis continu et les efforts de traction sont transmis de l'attache de traction vers le train de roues par l'intermédiaire du corps de citerne. Un tel véhicule citerne forme par exemple une citerne semi-remorque ou remorque pour le transport de produits gazeux, liquides, pâteux ou pulvérulents. L'invention concerne plus particulièrement des tronçons constituant le corps de citerne d'une telle citerne.

### ETAT DE LA TECHNIQUE ANTERIEURE

Généralement, les véhicules citernes autoportées comportent un corps de citerne en d'acier inoxydable. Ce corps de citerne est pourvu d'une attache de traction et il est supporté par au moins un train de roues. Les forces de traction sont transmises de l'attache de traction au train de roues par l'intermédiaire du corps de citerne en acier inoxydable. Une telle citerne est par exemple décrite dans le document EP0610567. Ces citernes en acier doivent être conçues pour être particulièrement résistantes, à la fois vis-à-vis de la pression due au fluide transporté, mais aussi vis-à-vis des forces de traction. Par ailleurs, l'acier est très avantageux puisqu'il peut être mis en contact avec des denrées alimentaires sans qu'il n'y ait de risque de contamination.

Cependant, les citernes en acier sont très lourdes et elles isolent mal thermiquement les produits transportés.

On connaît par ailleurs des véhicules citernes autoportés dont le corps de citerne est constitué en matériau composite. Un tel véhicule est décrit par exemple dans le document EP0698526. Dans ce document, le véhicule citerne comporte un réservoir horizontal qui est fabriqué en un matériau composite renforcé par des fibres et inséré dans un logement en forme de coque, également réalisé en un matériau composite renforcé par des fibres. La citerne se distingue par sa légèreté. Toutefois, la fabrication d'une telle citerne se révèle particulièrement complexe eu égard à la taille du réservoir horizontal et à la taille de la coque.

US 5918759 décrit également une citerne constituée de matériau composite.

Le document US3158383 décrit également un véhicule citerne autoporté dont le corps de citerne, qui transmet sans l'aide d'un châssis les efforts de traction et supporte les efforts de flexion et de pression, est composé d'un matériau composite. Cependant, ce corps de citerne est fabriqué d'un seul tenant et par conséquent, les dimensions de ce corps de citerne compliquent sa fabrication.

L'art antérieur connaît également le document US4292898 qui décrit un wagon citerne autoporté comportant un corps de citerne en matériau composite. Lors de la fabrication de ce corps de citerne, les fibres sont enroulées sur un mandrin reproduisant la forme du corps de citerne. Puis le corps de citerne est découpé verticalement suivant un axe longitudinal du corps de citerne pour pouvoir retirer le mandrin. Les deux moitiés du corps de citerne sont ensuite rassemblées. Cependant, ces deux moitiés ont la même longueur que le corps de citerne et par conséquent, elles ont des dimensions longitudinales très importantes qui compliquent leur fabrication et leur manipulation.

On connaît également le document FR2715385 qui décrit une cuve modulaire de grand module en polypropylène ou polyéthylène constituée d'une pluralité de module centraux présentant chacun au moins une extrémité ouverte pourvue d'une saillie annulaire, les modules étant reliés entre eux par l'intermédiaire d'un profilé annulaire qui est intercalé entre les deux saillies de deux modules successifs. Cependant une telle cuve n'est pas autoportée et elle n'est pas conçue pour transmettre des efforts de traction. En particulier, les interfaces entre deux jonctions sont conçues pour être étanches et pour résister à la pression mais elles ne sont pas assez résistantes pour transmettre des efforts de traction.

Par ailleurs US 2097113 décrit une citerne comportant plusieurs sections.

### EXPOSE DE L'INVENTION

L'invention vise à remédier aux inconvénients de l'état de la technique en proposant un tronçon léger mais résistant mécaniquement pouvant être assemblé de façon solide pour constituer le corps de citerne d'un véhicule citerne autoporté.

Plus précisément, l'invention concerne un tronçon en matériau composite pour véhicule citerne, le tronçon comportant au moins une paroi annulaire en matériau composite, la paroi annulaire présentant une symétrie de révolution autour d'un axe longitudinal, le tronçon présentant deux extrémités longitudinales annulaires présentant chacune des interfaces de fixation mécanique, le matériau composite comportant au moins un tissu de fibres imprégné d'une matrice.

Ce tronçon en matériau composite est léger et il a des dimensions longitudinales limitées, ce qui facilite sa fabrication, son transport, son stockage et sa manipulation. Ce tronçon est destiné à être associé à d'autres tronçons semblables grâce à ses interfaces de fixation mécaniques. Cet assemblage mécanique entre les tronçons est le plus souvent renforcé par un collage.

L'association de plusieurs tronçons permet de constituer un corps de citerne en matériau composite qui est constitué de plusieurs tronçons aux dimensions longitudinales limitées, ce qui facilite sa fabrication. En effet, les véhicules citernes peuvent avoir des dimensions longitudinales importantes, par exemple supérieures à 10 m, et c'est pourquoi il est important de pouvoir les réaliser en plusieurs tronçons. Ce découpage en tronçons permet également de réaliser des véhicules citernes dont les dimensions longitudinales sont variées, à partir de tronçons de taille standard. En outre, un tel véhicule citerne tracté permet un gain de poids par rapport aux véhicules citernes en acier.

Dans un tel véhicule citerne autoporté, les efforts de traction sont transmis directement de l'attache de traction au train de roues par l'intermédiaire d'au moins deux des tronçons. Le corps de citerne transmet donc les efforts de traction, sans passer par un châssis continu et il les transmet par l'intermédiaire de plusieurs tronçons, tandis que dans l'art antérieur les efforts étaient transmis par une pièce d'un seul tenant. Les interfaces mécaniques de fixation permettent de maintenir les tronçons entre eux de façon suffisamment solide pour qu'ils transmettent les efforts de freinage et de traction et qu'ils résistent aux efforts de pression.

Avantageusement, les tronçons en matériaux composites sont séparés suivant des plans perpendiculaires à l'axe longitudinal, de sorte à faciliter leur stockage et leur montage.

Par « matériau composite », on entend ici tout type de matériau hétérogène comportant une matrice et un renfort de fibres, tissées ou non. En particulier, on vise ici les matériaux composites à matrice organique constituée d'une résine polyester, vinylester, epoxyde, de résine thermoplastiques comme le polypropylène ou le polyamide, ou de résine phénolique si l'application nécessite une tenue particulière au feu. L'invention concerne également les matériaux composites dont la matrice est réalisée en carbone. Par soucis pour l'environnement, on peut également envisager des résines végétales. Le renfort peut être constitué de fibres tissées ou non, et notamment de fibres de verre, de carbone, d'aramide, de fibres végétales ou de cellulose.

Avantageusement, le tissu de fibres comporte au moins des fils de chaîne et des fils de trame, les fils de chaîne et les fils de trame étant orientés selon l'une des orientations suivantes :
- les fils de chaîne sont parallèles à l'axe longitudinal, les fils de trame étant perpendiculaires à l'axe longitudinal ; dans ce cas, les sollicitations de traction longitudinale sont supportées en majorité par les fils de chaîne, tandis que les sollicitations de pression sont supportées en majorité par les fils de trame. Suivant l'importance de chacune de ces sollicitations, les fils de chaîne peuvent être plus épais que les fils de trame, ou l'inverse.
- les fils de chaîne sont perpendiculaires à l'axe longitudinal, les fils de trames étant parallèles à l'axe longitudinal ; dans ce cas, les sollicitations de traction longitudinale sont supportées en majorité par les fils de trame, tandis que les sollicitations de pression sont supportées en majorité par les fils de chaîne. Suivant l'importance de chacune de ces sollicitations, les fils de chaîne peuvent être plus épais que les fils de trame, ou l'inverse.
- les fils de chaîne et les fils de trame sont orientés d'un angle de 45° par rapport à l'axe longitudinal, dans ce cas, les sollicitations de traction longitudinale sont réparties entre les fils de chaîne et les fils de trame, tout comme les sollicitations de pression.

Par « fils de chaîne » et « fils de trame », on entend des paquets de fibres qui sont assemblées entre elles pour former un « fil ». Ces fibres peuvent par exemple être torsadées entre elles mais tout autre procédé d'assemblage des fibres peut être utilisé.

Selon différents modes de réalisation, les fibres peuvent être constituées d'un matériau pris dans le groupe suivant : carbone, verre, carbure de silicium, aluminium, aramide, fibres végétales ou de cellulose, tandis que la matrice peut être constituée d'un ou plusieurs matériaux pris dans le groupe suivant : résine polyester, résine vinylester, résine epoxyde, résine thermoplastiques, polypromylène, polyamide, résine phénolique et carbone.

Avantageusement, le tronçon est constitué d'une structure sandwich comportant une paroi intérieure et une paroi extérieure entre lesquelles est intercalée une mousse, les parois intérieure et extérieure étant constituées chacune d'un matériau composite dans le cas où le corps de la citerne est pressurisable. Dans le cas où le corps de la citerne est non pressurisable, chaque tronçon peut être simplement constitué d'une paroi extérieure et d'une paroi intérieure en matériau composite.

Les parois intérieures et extérieures en matériau composite garantissent la résistance mécanique des tronçons, à la fois vis-à-vis de la pression du fluide transporté par le véhicule citerne, mais aussi vis-à-vis des forces de traction transmises par certains tronçons de l'attache de traction au train de roues.

Par « mousse », on entend un matériau expansé, par exemple de type mousse polyuréthane. La mousse permet d'isoler thermiquement le véhicule citerne, mais aussi d'améliorer la rigidité des tronçons. Elle permet en particulier d'améliorer la résistance des parois en flexion et leur résistance à la pression.

Avantageusement, chaque interface de fixation mécanique est constituée d'une pluralité d'inserts, les inserts étant répartis sur la circonférence de chacune des extrémités longitudinales des tronçons. Les inserts sont de préférence insérés dans la mousse de la structure sandwich. Ainsi les inserts sont-ils prisonniers de la mousse, ce qui leur permet de résister à l'arrachement lors de la transmission des forces de traction. Afin de répartir les efforts exercés sur chaque insert, les inserts sont de préférence répartis sur la circonférence des extrémités de chaque tronçon.

Avantageusement, chaque insert comporte un trou parallèle à l'axe longitudinal et une surface d'appui perpendiculaire à l'axe longitudinal. Le trou parallèle à l'axe longitudinal permet de boulonner axialement les inserts entre eux. Par ailleurs, chaque surface d'appui est de préférence appuyée contre la surface d'appui d'un insert d'un tronçon adjacent. Dans ce cas, les deux surface d'appui sont de préférence collées ensemble. En associant collage et boulonnage, l'assemblage des tronçons est suffisamment résistant pour transmettre les forces de traction et de freinage suivant la direction longitudinale.

Avantageusement, au moins une des extrémités longitudinales du tronçon comporte une pluralité de cavités creusées dans la paroi extérieure et dans la mousse de façon à permettre l'introduction d'une vis ou d'un goujon parallèle à l'axe longitudinal dans le trou parallèle à l'axe longitudinal permettant de boulonner axialement les inserts entre eux. Ces cavités permettent de boulonner deux tronçons entre eux. Elles sont ensuite rebouchées pour éviter les ponts thermiques.

Suivant différents modes de réalisation :
- les inserts d'une au moins des interfaces de fixation peuvent avoir une forme de tenon pour s'insérer dans des inserts d'un tronçon adjacent en forme de mortaise ;
- les inserts d'une au moins des interfaces de fixation ont une forme de mortaise pour s'insérer dans des inserts d'un tronçon adjacent en forme de tenon.

Cette fixation par tenon/mortaise permet d'améliorer la résistance mécanique et l'étanchéité de la jonction entre deux inserts.

Le tronçon peut comporter une cloison perpendiculaire à l'axe longitudinal qui s'étend entre la paroi annulaire en matériau composite. Un tel tronçon, aussi appelé « jonction intermédiaire » dans la suite, permet de séparer le corps de citerne en différents compartiments. Un tel corps de citerne peut alors transporter différents produits, isolés les uns des autres de manière étanche. Par ailleurs, la taille de chaque compartiment peut être choisie facilement en ajoutant ou supprimant des tronçons ne comportant pas de cloisons transversales entre deux jonctions intermédiaires.

Les jonctions intermédiaires peuvent également être placées aux extrémités longitudinales du corps de citerne, de sorte qu'elles constituent alors des fonds de citerne.

Les tronçons ne comportant pas de cloisons transversales seront aussi appelés « caissons » dans la suite afin d'alléger la description.

Les caissons, qui présentent des dimensions longitudinales importantes, sont standards, tandis que les jonctions, qui présentent préférentiellement de plus petites dimensions longitudinales et qui sont donc plus simples à fabriquer, comportent une cloison. L'agencement du corps de la citerne peut ainsi varier, à partir d'un nombre limité de modules élémentaires, ces modules élémentaires étant relativement simples à fabriquer. Par exemple, on peut ainsi choisir le nombre de compartiments présents dans le véhicule citerne, ainsi que leurs dimensions longitudinales.

Selon un mode particulier de l'invention, le tronçon peut également comporter un trou d'homme pour permettre l'accès à l'intérieur du corps de citerne. Lorsque le corps de citerne comporte plusieurs compartiments, chaque compartiment peut comporter un caisson avec un trou d'homme pour permettre l'accès à chaque compartiment. Ce trou d'homme est généralement constitué d'un orifice creusé dans la paroi annulaire du tronçon qui permet à un opérateur d'avoir accès à l'intérieur du tronçon en cas de besoin.

Le trou d'homme comporte de préférence un rebord en matériau composite qui est cerclé par un ou plusieurs cercles métalliques. Le cerclage métallique permet de renforcer la résistance mécanique du rebord en matériau composite. Par ailleurs, le système de fermeture du trou d'homme est de préférence fixé à ce cerclage métallique afin de ne pas fragiliser la paroi du tronçon en matériau composite.

### BREVE DESCRIPTION DES FIGURES

D'autres caractéristiques et avantages de l'invention ressortiront à la lecture de la description qui suit, en référence aux figures annexées, qui illustrent :
- la figure 1, une vue de côté d'un véhicule citerne tracté selon un premier mode de réalisation de l'invention, le véhicule citerne comportant au moins un trou d'homme;
- la figure 2, une vue de côté d'un corps de citerne selon un second mode de réalisation de l'invention, le corps de citerne comprenant trois jonctions intermédiaires et deux caissons en cours d'assemblage ;
- la figure 3, une vue de côté du corps de citerne de la figure 2 qui est assemblé ;
- la figure 4, une vue en coupe d'une des jonctions intermédiaires de la figure 2 reliée aux deux caissons qui l'entourent ;
- la figure 5, une vue en coupe en gros plan de la fixation de la jonction intermédiaire et d'un des caissons de la figure 4 ;
- la figure 6, une vue en coupe transversale d'une extrémité de la jonction intermédiaire de la figure 4**.**

Pour plus de clarté, les éléments identiques ou similaires sont repérés par des signes de référence identiques sur l'ensemble des figures.

### DESCRIPTION DETAILLEE D'UN MODE DE REALISATION

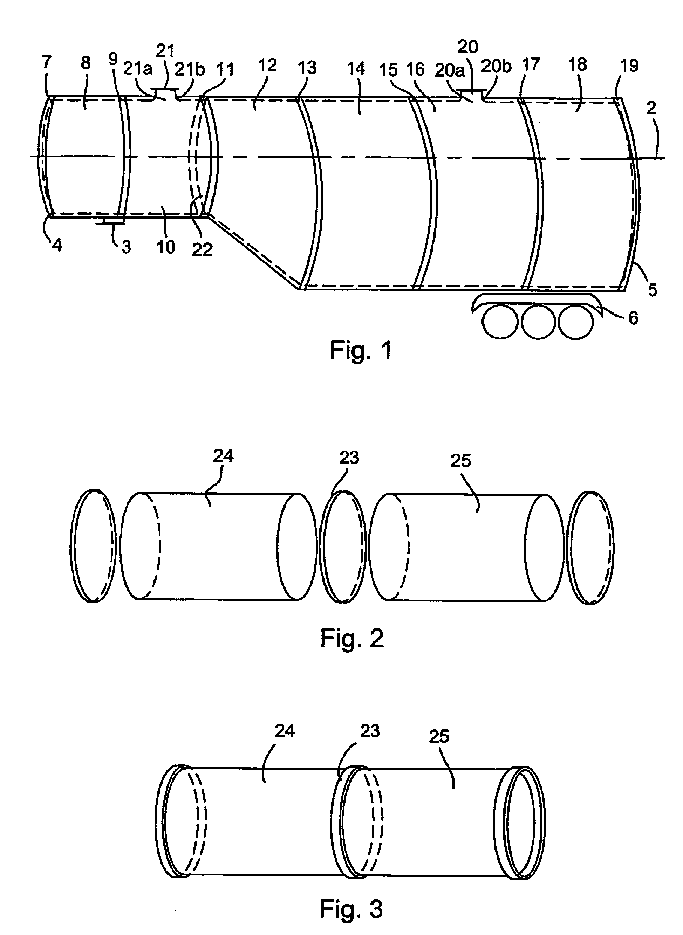

La figure 1 représente un véhicule citerne tracté selon un mode de réalisation de l'invention. Ce véhicule tracté comprend un corps de citerne 1 s'étendant suivant un axe longitudinal 2. Ce corps de citerne 1 est pourvu d'une attache de traction 3, localisée à proximité d'une première extrémité longitudinale 4 du corps de citerne. Cette attache de traction 3 permet de relier le véhicule citerne à un véhicule qui le tracte. À proximité d'une deuxième extrémité longitudinale 5, le corps de citerne 1 est supporté par un train de roues 6.

Le corps de citerne 1 est constitué d'une pluralité de tronçons 7-19 annulaires, à section constante ou variable, par exemple des tronçons cylindriques ou tronconiques, et de deux tronçons d'extrémité en calotte sphérique ou non. Les forces de traction sont transmises de l'attache de traction 3 vers le train de roues 6 par l'intermédiaire des tronçons 8 à 18.

Les tronçons 7 à 19 sont constitués chacun par une structure sandwich comprenant une paroi intérieure et une paroi extérieure entre lesquelles se trouve une couche de mousse polyuréthane. Par « paroi intérieure », on entend une paroi en contact avec le contenu de la citerne, tandis que par « paroi extérieure », on entend une paroi en contact avec le milieu environnant. La paroi intérieure comme la paroi extérieure sont composées d'un matériau composite constitué d'un tissu de fibres de carbone imprégné d'une résine.

Le tissu de fibre de carbone se compose de préférence d'au moins une nappe de fils de chaîne s'étendant sur la circonférence du tronçon, et d'au moins une nappe de fils de trame entrecroisés, s'étendant dans la direction longitudinale de la citerne. Alternativement, on peut également envisager des fils de chaîne longitudinaux et des fils de trames circonférentiels, ou des fils de trame et de chaîne formant des hélices entrecroisées avec un angle de d'hélice de 45° par exemple. Chaque fil de chaîne ou de trame est constitué d'un paquet de fibres, chaque fibre étant réalisée en carbone dans cet exemple. Les fibres sont par exemple torsadées entre elles pour former un paquet de fibres cohérent. Ce tissu de fibres est imprégné d'une résine époxy. On peut le cas échéant envisager plusieurs nappes de tissus superposées,.

Le drapage des parois intérieure de chaque tronçon est réalisé par enroulement filamentaire sur un mandrin ou / et par voie manuelle ou mécanisée. La mousse isolante est ensuite placée sur le drapage à des fins d'enrobage. Le drapage de la paroi extérieure est réalisé en dernier lieu. L'outillage est enfin fermé sur les différentes couches précédemment placées. Puis la résine est injectée par injection sur renfort en moule fermé (Resin tranfer moulding ou RTM).

Le matériau obtenu est recouvert d'un voile de surface et d'un enduit gélifié. Le voile de surface et l'enduit gélifié peuvent recouvrir une seule face de chaque paroi ou alors ses deux faces. Le gel-coat et le voile permettent d'éviter la contamination des produits transportés par le véhicule citerne par la paroi. Leur principale fonction est l'inertie chimique, l'étanchéité et l'aspect de surface

À titre indicatif, chaque paroi a de préférence une épaisseur comprise entre 3 et 10 mm. La couche de mousse à une épaisseur comprise entre 0 et 150 mm, de préférence égale à 100 mm. Une telle structure sandwich en matériau composite est légère tout en étant résistante mécaniquement. Plus généralement, la structure doit être suffisamment résistante pour transmettre les forces de traction et de freinage et pour résister à la pression et au poids des matériaux transportés par le véhicule citerne, ainsi qu'aux sollicitations dynamiques dues au mouvement des matériaux transportés dans le corps de citerne lors du transport.

Parmi les tronçons 7 à 19, on trouve des caissons 8, 10, 12, 14, 16 et 18. Ces caissons sont cylindriques ou tronconiques et ils présentent des dimensions longitudinales relativement importantes. Ces dimensions longitudinales sont comprises ici entre 1 et 2 m.

Les caissons 16 et 10 comprennent chacun un trou d'homme 20 ou 21 afin de permettre l'accès à l'intérieur du corps de la citerne. Le trou d'homme comprend de façon connue un trou de visite 20a, 21 a qui traverse la paroi annulaire des caissons 16 et 10. Ce trou de visite est entouré d'une paroi cylindrique 20b, 21 b qui est constituée du même matériau que celui qui compose la paroi des caissons 16, 10. Le trou d'homme 20, 21 est moulé en même temps que le caisson 16, 10. La paroi cylindrique est ensuite cerclée par un cercle métallique qui permet de renforcer sa structure. Par ailleurs, un système de fermeture du trou d'homme est relié au trou d'homme par l'intermédiaire de ce cercle métallique. Par exemple, un couvercle et sa charnière peuvent être fixés sur le cercle métallique. Le corps de citerne en matériau composite peut ainsi être équipée des mêmes trous d'homme que les corps de citerne classiques, en acier, sans que la paroi du corps de citerne en matériau composite ne soit fragilisée.

De la même manière les caissons peuvent comporter, en partie basse, des trous de vidange et autres piquages.

Entre deux caissons, se trouve une jonction intermédiaire 9, 11, 13, 15 ou 17. Chaque jonction intermédiaire a une largeur ou une longueur comprise entre 15 et 30 cm. Ces jonctions intermédiaires permettent de relier les caissons entre eux et elles peuvent comporter ou non une cloison qui s'étend suivant un plan perpendiculaire à l'axe longitudinal. La jonction 11 est par exemple porteuse d'une cloison 22 qui sépare le corps de citerne en deux compartiments. L'accès à l'intérieur de chaque compartiment est possible grâce aux trous d'homme 20 et 21. La taille de chaque compartiment peut être facilement modifiée en ajoutant ou en retirant des caissons.

La citerne est fermée à chacune de ces extrémités longitudinales 4, 5 par des fonds de citerne qui sont formés par des jonctions intermédiaires 7 et 19 porteuses d'une cloison perpendiculaire à l'axe longitudinal. Ce système de jonctions et de caissons permet de réaliser des citernes et taille et d'agencement modulable à partir d'un nombre réduit d'éléments standardisés.

Les figures 2 et 3 représentent un corps de citerne avant et après assemblage des jonctions et des caissons. Ce corps de citerne comporte notamment une jonction intermédiaire 23 entre deux caissons 24 et 25. Ces trois tronçons 23, 24 et 25 sont cylindriques.

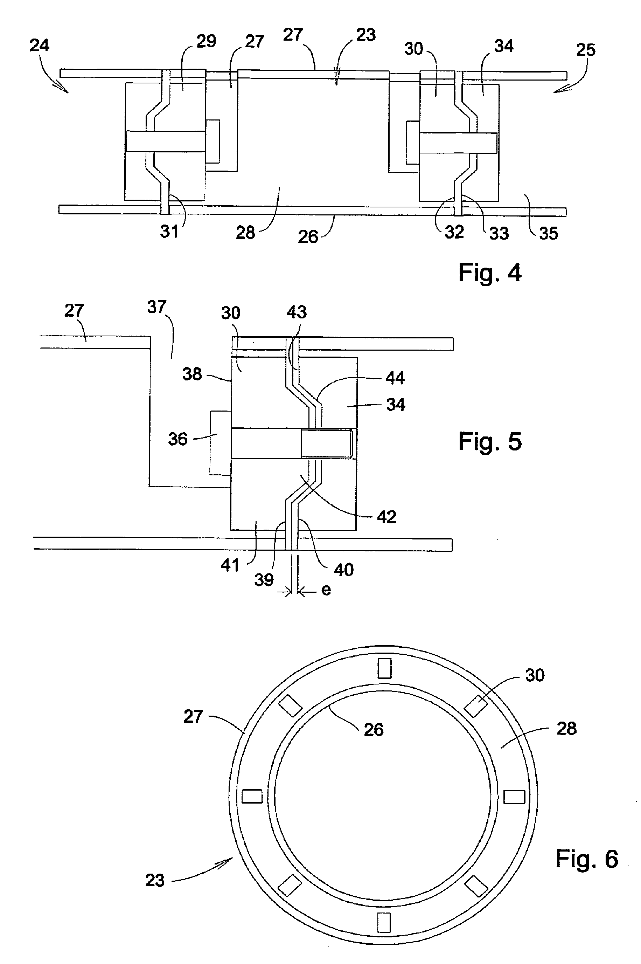

L'assemblage d'une jonction intermédiaire 23 entre deux caissons 24 et 25 est représenté plus précisément sur la figure 4. La jonction 23 comporte une paroi intérieure 26 et une paroi extérieure 27 entre lesquelles est intercalée une couche de mousse de polyuréthane 28.

La jonction intermédiaire 23 présente deux extrémités longitudinales 31 et 32. L'extrémité longitudinale 32 de la jonction 23 est représentée, en coupe transversale, sur la figure 6. Dans la mousse 28 de l'extrémité longitudinale, sont insérés des inserts complémentaires 30. Ces inserts complémentaires 30 sont prisonniers de la mousse 28 et de l'enrobage fibreux afin d'empêcher leur arrachement lorsqu'ils transmettent les efforts de traction. Les inserts complémentaires sont repartis, à intervalle régulier ou non, sur la circonférence de l'extrémité 32. Afin de repartir les efforts exercés sur chacun des inserts, et afin d'éviter leur arrachement, il est préférable d'avoir le maximum d'inserts dans les extrémités. Les inserts sont placés dans la mousse lors du drapage des caissons, de préférence avant l'injection de la résine. Après polymérisation de la résine, les caissons sont finalisés et il suffit de les assembler entre eux par vissage et collage.

Pour cela, le caisson 25 qui est adjacent à la jonction 23 présente une extrémité longitudinale 33 dans laquelle sont insérés des inserts 34. Les inserts 34 ont une forme complémentaire des inserts complémentaires 30. Par exemple ici, les inserts 34 ont une forme de mortaise, tandis que les inserts complémentaires ont une forme de tenon. Plus précisément, dans ce mode de réalisation, les inserts 34 et les inserts complémentaires 30 ont une section transversale rectangulaire. Les inserts complémentaires ont une section longitudinale en forme de T renversé, la barre du T 41 étant disposée du côté de la jonction intermédiaire, tandis que le pied du T 42 est du côté du caisson. L'insert 34 présente une forme complémentaire de l'insert complémentaire, c'est-à-dire qu'il comporte une face d'appui 43 contre laquelle vient s'appuyer la barre du T et une cavité 44 dans laquelle vient s'encastrer le pied du T. L'insert 34 présente un trou fileté tandis que l'insert complémentaire présente chacun un trou lisse. Le trou fileté et le trou lisse sont longitudinaux et ils traversent l'insert 34 et l'insert complémentaire en leur milieu. Ces trous sont destinés à recevoir un goujon permettant de solidariser l'insert 34 et l'insert complémentaire 30..

Les inserts 34 sont également prisonniers de la mousse 35 et ils sont disposés de telle sorte que, lorsque la jonction 23 et le caisson 25 sont mis bout à bout, chaque insert 34 s'emboîte dans un insert complémentaire 30. La mousse peut également recouvrir la face 39 ou 40 de chaque insert de façon à augmenter l'emprisonnement des inserts dans la mousse. Dans le cas où la mousse recouvre la face avant de chaque insert, l'épaisseur e de mousse sur chaque face avant 39 ou 40 est relativement faible et constante de sorte que la mousse reproduise la forme de la face avant de l'insert.

La fixation de la jonction 23 et du caisson 25 est représentée plus précisément sur la figure 5. Une figure symétrique pourrait être utilisée pour représenter la fixation de la jonction 23 et du caisson 24.

Les extrémités 32 et 33 de la jonction et du caisson sont collées ensemble. Cet assemblage est ensuite sécurisé par vissage. Pour cela, une vis 36 est vissée suivant une direction parallèle à l'axe longitudinal à travers l'insert complémentaire 30 et l'insert 34. Afin de pouvoir introduire la vis au centre de la face arrière de l'insert complémentaire 30, une cavité 37 est présente derrière la face arrière 38 de l'insert 30. Cette cavité est creusée à travers la paroi extérieure 27 du caisson ainsi que dans une partie de la mousse. Une fois la vis introduite dans les inserts, cette cavité est comblée pour éviter les ponts thermiques et les zones de fragilité mécanique.

Le corps de citerne selon l'invention est donc léger grâce à ses parois en matériau composite, simple à fabriquer et modulable, grâce à son découpage en tronçons, et en outre, il est suffisamment résistant pour supporter la pression et la charge des matériaux qu'il contient et pour transmettre les efforts de traction.

Naturellement, l'invention n'est pas limitée à l'exemple de réalisation ci-dessus, et diverses modifications ou variantes peuvent être envisagées. En particulier, les tronçons peuvent être d'un seul type. Dans ce cas, les tronçons sont tous des caissons qui présentent une extrémité longitudinale pourvue d'un insert et une autre extrémité longitudinale pourvue d'un insert complémentaire. Les caissons sont alors mis bout à bout et ils sont fixés directement les uns avec les autres. On peut également envisager de fixer deux tronçons successifs grâce à des boulons disposés perpendiculairement à l'axe longitudinal. Ce type de fixation est particulièrement bien adapté aux véhicules citernes non pressurisables, pour lesquels les parois ne contiennent pas de mousse. Dans ce cas, les extrémités longitudinales de ces caissons successifs peuvent se chevaucher suivant la direction longitudinale. Les extrémités peuvent alors être collées ensemble sur la zone sur laquelle elles se chevauchent et un système vis-écrou peut venir en renforcement de ce collage.

## Revendications

1. Tronçon en matériau composite pour véhicule citerne, **caractérisé en ce qu'**il comporte au moins une paroi annulaire en matériau composite, la paroi annulaire présentant une symétrie de révolution autour d'un axe longitudinal, le tronçon (7-19) présentant deux extrémités longitudinales annulaires (31, 32, 33) présentant chacune des interfaces de fixation mécanique, le matériau composite comportant au moins un tissu de fibres imprégné d'une matrice.

2. Tronçon annulaire selon la revendication précédente, **caractérisé en ce que** le tissu de fibres comporte au moins des fils de chaîne et des fils de trame, les fils de chaîne et les fils de trame étant orientés selon l'une des orientations suivantes :
- les fils de chaîne sont parallèles à l'axe longitudinal, les fils de trames étant perpendiculaires à l'axe longitudinal ;
- les fils de chaîne sont perpendiculaires à l'axe longitudinal, les fils de trames étant parallèles à l'axe longitudinal ;
- les fils de chaîne et les fils de trame sont orientés d'un angle de 45° par rapport à l'axe longitudinal..

3. Tronçon annulaire selon l'une quelconque des revendications précédentes, **caractérisé en ce que** les fibres sont constituées d'un matériau pris dans le groupe suivant : carbone, verre, carbure de silicium, aluminium, aramide, fibres végétales ou de cellulose.

4. Tronçon annulaire selon l'une quelconque des revendications précédentes, **caractérisé en ce que** la matrice est constituée d'un ou plusieurs matériaux pris dans le groupe suivant : résine polyester, résine vinylester, résine epoxyde, résine thermoplastiques, polypromylène, polyamide, résine phénolique et carbone.

5. Tronçon annulaire selon l'une quelconque des revendications précédentes, **caractérisé en ce que** le tronçon (7-19) est constitué d'une structure sandwich comportant une paroi intérieure et une paroi extérieure entre lesquelles est intercalée une mousse (28), les parois intérieure et extérieure étant constituées chacune d'un matériau composite.

6. Tronçon annulaire selon l'une quelconque des revendications précédentes, **caractérisé en ce que** chaque interface de fixation mécanique est constituée d'une pluralité d'inserts (29, 30, 34) les inserts étant répartis sur la circonférence de chacune des extrémités longitudinales des tronçons (7-19).

7. Tronçon annulaire selon les revendications 5 et 6, **caractérisé en ce que** les inserts (29, 30, 34) sont insérés dans la mousse (28) de la structure sandwich.

8. Tronçon annulaire selon l'une quelconque des revendications 6 ou 7, **caractérisé en ce que** chaque insert (29, 30, 34) comporte un trou parallèle à l'axe longitudinal et une surface d'appui perpendiculaire à l'axe longitudinal.

9. Tronçon annulaire selon l'une quelconque des revendications 6 à 8, **caractérisé en ce que** tes inserts (29, 30, 34) d'une au moins des interfaces de fixation ont une forme de tenon pour s'insérer dans des inserts (29, 30, 34) d'un tronçon adjacent en forme de mortaise.

10. Tronçon annulaire selon l'une quelconque des revendications 6 à 8, **caractérisé en ce que** les inserts (29, 30, 34) d'une au moins des interfaces de fixation ont une forme de mortaise pour s'insérer dans des inserts (29, 30, 34) d'un tronçon adjacent en forme de tenon.

11. Tronçon annulaire selon l'une quelconque des revendications précédentes, **caractérisé en ce qu'**il comporte un trou d'homme (20, 21).

12. Tronçon annulaire selon la revendication précédente, **caractérisé en ce que** le trou d'homme (20, 21) comporte un rebord en matériau composite qui est cerclé par un ou plusieurs cercles métalliques.

13. Tronçon annulaire selon l'une quelconque des revendications précédentes, **caractérisé en ce qu'**il comporte une paroi perpendiculaire à l'axe longitudinal qui s'étend entre la paroi annulaire en matériau composite.

## Claims

1. Section made of composite material for tank vehicle, **characterised in that** it comprises at least one annular wall made of composite material, the annular wall having a symmetry of revolution around a longitudinal axis, the section (7-19) having two annular longitudinal ends (31, 32, 33) each having interfaces for mechanical fastening, the composite material comprising at least one fabric of fibres impregnated with a matrix.

2. Annular section as claimed in the preceding claim, **characterised in that** the fabric of fibres comprises at least warp threads and weft threads, the warp threads and weft threads being oriented according to one of the following orientations:
- the warp threads are parallel to the longitudinal axis, the weft threads being perpendicular to the longitudinal axis;
- the warp threads are perpendicular to the longitudinal axis, the weft threads being parallel to the longitudinal axis;
- the warp threads and the weft threads are oriented by an angle of 45° in relation to the longitudinal axis.

3. Annular section as claimed in any preceding claim, **characterised in that** the fibres are comprised of a material taken from the following group: carbon, glass, silicon carbide, aluminium, aramid, vegetable fibres or cellulose.

4. Annular section as claimed in any preceding claim, **characterised in that** the matrix is comprised of one or several materials taken from the following group: polyester resin, vinylester resin, epoxy resin, thermoplastic resin, polypropylene, polyamide, phenolic resin and carbon.

5. Annular section as claimed in any preceding claim, **characterised in that** the section (7-19) is comprised of a sandwich structure comprising an inside wall and an outside wall between which is inserted a foam (28), the inside and outside walls each being comprised of a composite material.

6. Annular section as claimed in any preceding claim, **characterised in that** each interface for mechanical fastening is comprised of a plurality of inserts (29, 30, 34), the inserts being distributed over the circumference of each of the longitudinal ends of the sections (7-19).

7. Annular section according to claims 5 and 6, **characterised in that** the inserts (29, 30, 34) are inserted into the foam (28) of the sandwich structure.

8. Annular section according to any of claims 6 or 7, **characterised in that** each insert (29, 30, 34) comprises a hole parallel to the longitudinal axis and a support surface perpendicular to the longitudinal axis.

9. Annular section according to any of claims 6 to 8, **characterised in that** the inserts (29, 30, 34) of at least one of the interfaces for fastening have the shape of a tenon to be inserted into the inserts (29, 30, 34) of an adjacent section in the shape of a mortise.

10. Annular section according to any of claims 6 to 8, **characterised in that** the inserts (29, 30, 34) of at least one of the interfaces for fastening have the shape of a mortise to be inserted into the inserts (29, 30, 34) of an adjacent section in the shape of a tenon.

11. Annular section as claimed in any preceding claim, **characterised in that** it comprises a manhole (20, 21).

12. Annular section as claimed in the preceding claim, **characterised in that** the manhole (20, 21) comprises an edge made of composite material which is encircled by one or several metal circles.

13. Annular section as claimed in any preceding claim, **characterised in that** it comprises a wall perpendicular to the longitudinal axis which extends between the annular wall made of composite material.

## Patentansprüche

1. Abschnitt aus Verbundmaterial für ein Tankfahrzeug, **dadurch gekennzeichnet, dass** er mindestens eine ringförmige Wand aus Verbundmaterial umfasst, wobei die ringförmige Wand eine Rotationssymmetrie um eine Längsachse aufweist, wobei der Abschnitt (7 - 19) zwei ringförmige längliche Enden (31, 32, 33) aufweist, die jeweils Schnittstellen zur mechanischen Befestigung aufweisen, wobei das Verbundmaterial mindestens ein Gewebe aus Fasern umfasst, das mit einer Matrize imprägniert ist.

2. Ringförmiger Abschnitt nach dem vorhergehenden Anspruch, **dadurch gekennzeichnet, dass** das Gewebe aus Fasern mindestens Kettenfäden und Schussfäden umfasst, wobei die Kettenfäden und die Schussfäden in einer der folgenden Richtungen ausgerichtet sind:
- die Kettenfäden sind parallel zur Längsachse, wobei die Schussfäden senkrecht zur Längsachse sind;
- die Kettenfäden sind senkrecht zur Längsachse, wobei die Schussfäden parallel zur Längsachse sind;
- die Kettenfäden und die Schussfäden sind in einem Winkel von 45° mit Bezug auf die Längsachse ausgerichtet.

3. Ringförmiger Abschnitt nach einem der vorhergehenden Ansprüche, **dadurch gekennzeichnet, dass** die Fasern aus einem Material, ausgewählt aus der folgenden Gruppe, gebildet sind: Kohlenstoff, Glas, Siliziumcarbid, Aluminium, Aramid, pflanzliche Fasern oder aus Zellulose.

4. Ringförmiger Abschnitt nach einem der vorhergehenden Ansprüche, **dadurch gekennzeichnet, dass** die Matrize aus einem Material oder mehreren Materialien, ausgewählt aus der folgenden Gruppe, gebildet ist: Polyesterharz, Vinylesterharz, Epoxydharz, thermoplastische Harze, Polypromylen, Polyamid, Phenol- und Kohlenstoffharz.

5. Ringförmiger Abschnitt nach einem der vorhergehenden Ansprüche, **dadurch gekennzeichnet, dass** der Abschnitt (7 - 19) aus einer Sandwichstruktur gebildet ist, umfassend eine innere Wand und eine äußere Wand, zwischen denen ein Schaum (28) eingefügt ist, wobei die innere und die äußere Wand jeweils aus einem Verbundmaterial gebildet sind.

6. Ringförmiger Abschnitt nach einem der vorhergehenden Ansprüche, **dadurch gekennzeichnet, dass** jede Schnittstelle zur mechanischen Befestigung aus einer Vielzahl von Einsätzen (29, 30, 34) gebildet ist, wobei die Einsätze auf dem Umfang jedes der länglichen Enden der Abschnitte (7 - 19) verteilt sind.

7. Ringförmiger Abschnitt nach Anspruch 5 und 6, **dadurch gekennzeichnet, dass** die Einsätze (29, 30, 34) in den Schaum (28) der Sandwichstruktur eingeführt sind.

8. Ringförmiger Abschnitt nach einem der Ansprüche 6 oder 7, **dadurch gekennzeichnet, dass** jeder Einsatz (29, 30, 34) ein Loch aufweist, das parallel zur Längsachse ist, und eine Auflagefläche, die senkrecht zur Längsachse ist.

9. Ringförmiger Abschnitt nach einem der Ansprüche 6 bis 8, **dadurch gekennzeichnet, dass** die Einsätze (29, 30, 34) mindestens einer der Schnittstellen zur Befestigung die Form eines Zapfens aufweisen, um in die Einsätze (29, 30, 34) eines benachbarten Abschnitts in Form einer Einkerbung eingeführt zu werden.

10. Ringförmiger Abschnitt nach einem der Ansprüche 6 bis 8, **dadurch gekennzeichnet, dass** die Einsätze (29, 30, 34) mindestens einer der Schnittstellen zur Befestigung die Form einer Einkerbung aufweisen, um in die Einsätze (29, 30, 34) eines benachbarten Abschnitts in Form eines Zapfens eingeführt zu werden.

11. Ringförmiger Abschnitt nach einem der vorhergehenden Ansprüche, **dadurch gekennzeichnet, dass** er ein Mannloch (20, 21) umfasst.

12. Ringförmiger Abschnitt nach dem vorhergehenden Anspruch, **dadurch gekennzeichnet, dass** das Mannloch (20, 21) eine Kante aus Verbundmaterial umfasst, die von einem oder von mehren Metallreifen umrundet ist.

13. Ringförmiger Abschnitt nach einem der vorhergehenden Ansprüche, **dadurch gekennzeichnet, dass** er eine Wand umfasst, die senkrecht zur Längsachse ist, die sich zwischen der ringförmigen Wand aus Verbundmaterial erstreckt.
